(19) Europäisches Patentamt
European Patent Office
Office européen des brevets

(11) EP 1 560 880 B1

(12) # FASCICULE DE BREVET EUROPEEN

(45) Date de publication et mention de la délivrance du brevet:
**27.08.2014 Bulletin 2014/35**

(21) Numéro de dépôt: **03753519.2**

(22) Date de dépôt: **07.10.2003**

(51) Int Cl.:
***C08K 13/02*** *(2006.01)* ***C08L 21/00*** *(2006.01)*
***B60C 9/00*** *(2006.01)* *C08K 13/02 (2006.01)*
*C08K 5/548 (2006.01)* *C08K 3/00 (2006.01)*

(86) Numéro de dépôt international:
**PCT/EP2003/011074**

(87) Numéro de publication internationale:
**WO 2004/033548 (22.04.2004 Gazette 2004/17)**

(54) **CEINTURE DE PNEUMATIQUE A BASE DUNE CHARGE INORGANIQUE ET D'UN SILANE-POLYSULFURE**

LUFTREIFENGÜRTEL AUS EINEM ANORGANISCHEN FÜLLSTOFF UND EINEM POLYSULFIDSILAN

TYRE BELT BASED ON AN INORGANIC FILLER AND A POLYSULPHIDE SILANE

(84) Etats contractants désignés:
**AT BE BG CH CY CZ DE DK EE ES FI FR GB GR HU IE IT LI LU MC NL PT RO SE SI SK TR**

(30) Priorité: **11.10.2002 FR 0212818**

(43) Date de publication de la demande:
**10.08.2005 Bulletin 2005/32**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1763 Granges-Paccot (CH)**

(72) Inventeur: **VIDAL, Pierre-Louis**
**F-63000 Clermont-Ferrand (FR)**

(74) Mandataire: **Ribière, Joel et al**
**Michelin & Cie**
**Service SGD/LG/PI-LAD**
**63040 Clermont-Ferrand Cedex 09 (FR)**

(56) Documents cités:
**EP-A- 0 864 605** **EP-A- 1 043 357**
**WO-A-02/31041** **WO-A-02/053827**
**WO-A-02/092680** **FR-A- 2 804 121**
**GB-A- 2 199 329** **US-A- 5 871 597**
**US-B1- 6 218 561**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 560 880 B1

Printed by Jouve, 75001 PARIS (FR)

## Description

La présente invention se rapporte aux pneumatiques et aux armatures de renforcement du sommet de ces pneumatiques, encore appelées « ceintures ».

Elle est plus particulièrement relative aux compositions d'élastomères diéniques renforcées d'une charge inorganique telle que silice utilisées pour constituer tout ou partie de la matrice caoutchouteuse de telles armatures, ainsi qu'aux agents de liaison utilisés pour le couplage de ces charges inorganiques renforçantes et des élastomères diéniques.

Un pneumatique à armature de carcasse radiale, de manière connue, comporte une bande de roulement, deux bourrelets inextensibles, deux flancs reliant les bourrelets à la bande de roulement et une ceinture disposée circonférentiellement entre l'armature de carcasse et la bande de roulement, cette ceinture étant constituée de diverses nappes (ou "couches") de caoutchouc renforcées ou non par des éléments de renforcement ("renforts") tels que des câblés ou des monofilaments, du type métalliques ou textiles.

Une ceinture de pneumatique est généralement constituée d'au moins deux nappes de ceinture superposées, dites parfois nappes "de travail" ou nappes "croisées", dont les renforts sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneu considéré. Chacune de ces deux nappes croisées est constituée d'une matrice de caoutchouc, dite parfois "gomme de calandrage", enrobant les renforts. Les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

La ceinture d'un pneumatique doit satisfaire de manière connue à différentes exigences, souvent contradictoires, en premier lieu :

(i) être la plus rigide possible à faible déformation, car elle contribue d'une manière substantielle à rigidifier le sommet du pneumatique ;

(ii) avoir une hystérèse aussi basse que possible, pour d'une part minimiser l'échauffement en roulage de la zone interne du sommet et d'autre part réduire la résistance au roulement du pneumatique, synonyme d'économie de carburant ;

(iii) posséder enfin une endurance élevée, vis-à-vis en particulier du phénomène de séparation, fissuration des extrémités des nappes croisées dans la zone "d'épaule" du pneumatique, connu sous le terme de "clivage", ce qui exige notamment des compositions qui constituent les nappes de ceinture de présenter une résistance élevée à la propagation des fissures.

La troisième exigence est particulièrement forte pour les enveloppes de pneumatiques Poids-lourd, conçues pour pouvoir être rechapées une ou plusieurs fois lorsque les bandes de roulement qu'elles comportent atteignent un degré d'usure critique après un roulage prolongé.

Les compositions élastomériques des ceintures des pneumatiques sont généralement à base d'élastomère isoprénique, le plus souvent du caoutchouc naturel, et de noir de carbone à titre de charge renforçante majoritaire. Elles peuvent contenir, en faible proportion, une charge inorganique renforçante telle que silice destinée à améliorer les propriétés adhésives du caoutchouc à l'égard des renforts métalliques ou textiles.

La demande EP-A-0 722 977 (ou US-A-5 871 957) a proposé de remplacer la totalité du noir de carbone par de la silice, associée à un agent de couplage du type silane-polysulfure, en vue d'abaisser l'hystérèse des gommes et de diminuer ainsi la résistance au roulement des pneumatiques.

L'emploi d'une charge inorganique renforçante telle que silice pose toutefois le problème bien connu de faculté de mise en oeuvre des compositions à l'état cru ("processabilité").

De manière connue, pour des raisons d'affinités réciproques, les particules de charge inorganique ont en effet une fâcheuse tendance, dans une matrice élastomérique à l'état cru, à s'agglomérer entre elles. Ces interactions, outre le fait qu'elles peuvent limiter la dispersion de la charge et donc les propriétés de renforcement, tendent à augmenter la consistance, la viscosité des compositions pendant les opérations de malaxage thermo-mécanique, et donc à rendre leur processabilité plus difficile qu'en présence de noir de carbone, dès que le taux de charge inorganique est relativement important. Cette augmentation de dureté est en outre préjudiciable aux opérations industrielles de calandrage à l'état cru des compositions pour l'élaboration des tissus métalliques ou textiles visés, voire même incompatibles dans certains cas avec de telles opérations.

L'inconvénient majeur ci-dessus a jusqu'ici constitué un frein notable au développement industriel de compositions à base de charge inorganique renforçante, dans les ceintures des pneumatiques.

WO-02/31041 décrit une composition comprenant un élastomère diénique 30-120 pce d'une charge inorganique renforçante (silice) et 3-12 pce d'un agent de couplage organosilane polysulfure. Le composé silane est un organosilane polysulfure comprenant un groupement silanol. Les compositions sont utilisées pour la préparation de produits semi-finis de pneumatique tels que des ceintures. Par ailleur, EP-A-1 043 357 divulgue des compositions de caoutchouc destinées à la préparation de pneumatiques en général et comprenant un élastomère diénique, une charge inorganique renforçante et un organosilane disulfure comprenant deux groupes alkyles et un groupe alkoxy sur l'atome de Si. Toutefois, la composition n'est pas destinée à la préparation de ceintures de pneumatique.

Or, les Demanderesses ont découvert lors de leurs recherches que l'emploi d'un agent de couplage spécifique dans les compositions de caoutchouc des ceintures de pneumatiques, renforcées d'une charge inorganique, permet de pallier au moins en grande partie l'inconvénient précité.

Ce résultat important est, qui plus est, obtenu sans pénalisation des autres propriétés, bien au contraire avec une amélioration d'une autre caractéristique essentielle, à savoir la résistance à la fatigue et à la propagation de fissures.

L'invention offre ainsi aux armatures de renforcement de sommet des pneumatiques, ainsi qu'à ces pneumatiques eux-mêmes, un compromis global de propriétés nouveau et particulièrement avantageux.

En conséquence, un premier objet de l'invention concerne une ceinture de pneumatique comportant au moins une composition élastomérique à base d'au moins un élastomère isoprénique, une charge inorganique renforçante et un silane-polysulfure est choisi parmi les polysulfures de bis-monoalkoxy dimethylsilyl propyle et les mélanges de ces polysulfures.

L'invention concerne également tout pneumatique comportant une telle ceinture.

Les pneumatiques de l'invention sont particulièrement destinés à équiper des véhicules à moteur de type tourisme, SUV *("Sport Utility Vehicles"),* deux roues (notamment motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention a également pour objet l'utilisation d'une ceinture conforme à l'invention pour la fabrication de pneumatiques neufs ou pour le rechapage de pneumatiques usagés, tout particulièrement dans le cas de pneumatiques Poids-lourd.

Les ceintures selon l'invention sont préparées par un procédé qui constitue un autre objet de la présente invention ; ledit procédé comporte les étapes suivantes :

- incorporer à un élastomère isoprénique, dans un mélangeur :
    - une charge inorganique renforçante ;
    - un silane-polysulfure à titre d'agent de couplage,
- malaxer thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite un système de vulcanisation ;
- malaxer le tout jusqu'à une température maximale inférieure à 110°C,
- calandrer ou extruder la composition ainsi obtenue sous la forme d'une couche de caoutchouc,
- incorporer cette couche, après ajout éventuel de renforts textiles ou métalliques, dans la ceinture de pneumatique,

et il est caractérisé en ce que ledit silane-polysulfure est choisi parmi les polysulfures de bis-monoalkoxydimethylsilylpropyle et les mélanges de ces polysulfures.

L'invention concerne également, en soi, l'utilisation d'un silane-polysulfure de formule (I) précitée pour la fabrication d'une ceinture de pneumatique comportant au moins une composition isoprénique à base d'une charge inorganique renforçante.

L'invention ainsi que ses avantages seront aisément compris à la lumière de la description et des exemples de réalisation qui suivent, ainsi que de la figure schématique relative à ces exemples qui représente une coupe radiale d'un pneumatique Poids-lourd à armature de carcasse radiale.

## I. <u>MESURES ET TESTS UTILISES</u>

Les compositions de caoutchouc sont caractérisées avant et après cuisson, comme indiqué ci-après.

A) Plasticité Mooney:

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM=0,83 Newton.mètre).

B) Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : $t_i$ est le délai d'induction, c'est-à-dire le temps nécessaire au début de la réaction de vulcanisation ; $t_\alpha$ (par exemple $t_{95}$) est le temps nécessaire pour atteindre une conversion de $\alpha$%, c'est-à-dire $\alpha$% (par exemple 95%) de l'écart entre les couples minimum et maximum. On mesure également la constante de vitesse de conversion notée K (exprimée en $min^{-1}$), d'ordre 1, calculée entre 30% et 80% de conversion, qui permet d'apprécier la cinétique de vulcanisation.

C) Essais de traction:

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) ou "vrais" (ramenés dans ce cas à la section réelle de l'éprouvette) à 10% d'allongement (notés respectivement "MA10" et "E10") et 100% d'allongement ("MA100" et "E100"). Toutes ces mesures de traction sont effectuées dans les conditions normales de température ($23\pm2$°C) et d'hygrométrie ($50\pm5$% d'humidité relative), selon la norme française NF T 40-101 (décembre 1979). On mesure également les contraintes à la rupture (en MPa) et les allongements à la rupture (en %), à une température de 100°C.

D) Propriétés dynamiques:

Les propriétés dynamiques sont mesurées sur un viscoanalyseur (Metravib VA4000), selon la norme ASTM D5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour); pour le cycle retour, on enregistre la valeur maximale du facteur de perte, notée $\tan(\delta)_{max}$.

E) Test "MFTRA":

La résistance à la fatigue et à la propagation des entailles (avec amorce initiale), exprimée en nombre de cycles ou en unités relatives (u.r.), est mesurée de manière connue sur une éprouvette comportant une entaille de 1 mm et soumise à des tractions répétées de faible fréquence jusqu'à un allongement de 20%, à l'aide d'un appareil Monsanto (type "MFTR"), jusqu'à rupture de l'éprouvette, selon la norme française NF T46-021.

## II. CONDITIONS DE REALISATION DE L'INVENTION

Les ceintures de pneumatiques de l'invention ont pour caractéristique essentielle d'incorporer, dans tout ou partie de leur matrice caoutchouteuse, au moins une composition élastomérique à base d'au moins chacun des constituants suivants: (i) un (au moins un) élastomère isoprénique ; (ii) une (au moins une) charge inorganique à titre de charge renforçante, (iii) un (au moins un) silane-polysulfure spécifique tel que décrit ci-dessus en tant qu'agent de couplage (charge inorganique/élastomère isoprénique).
Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication des compositions de caoutchouc, des ceintures et pneumatiques, en particulier au cours de leur vulcanisation.
Dans la présente description, sauf indication expresse différente, tous les pourcentages (%) indiqués sont des % en masse.

II-1. Elastomère diénique

Par élastomère (ou caoutchouc) "diénique", on entend de manière générale un élastomère issu au moins en partie (i.e., un homopolymère ou un copolymère) de monomères diènes c'est-à-dire de monomères porteurs de deux doubles liaisons carbone-carbone, conjuguées ou non. Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% molaire) ; dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, on entend dans la présente demande par "élastomère isoprénique", de manière connue, un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En coupage (i.e., mélange) avec l'élastomère isoprénique ci-dessus, les compositions de l'invention peuvent contenir des élastomères diéniques autres qu'isopréniques, de préférence à titre minoritaire (i.e., pour moins de 50% en poids, soit moins de 50 pce) ; dans un tel cas, l'élastomère isoprénique représente plus préférentiellement 75 à 100% en poids du total d'élastomère diénique, soit 75 à 100 pce (parties en poids pour cent parties d'élastomère).

A titre de tels élastomères diéniques autres qu'isopréniques, on citera notamment tout élastomère diénique fortement insaturé choisi en particulier dans le groupe constitué par les polybutadiènes (BR), en particulier les polybutadiènes cis-1,4 ou 1,2-syndiotactique et ceux ayant une teneur en unités-1,2 comprise entre 4% et 80%, et les copolymères de butadiène, notamment les copolymères de styrène-butadiène (SBR), et en particulier ceux ayant une teneur en styrène comprise entre 5 et 50% en poids et plus particulièrement entre 20% et 40% en poids, une teneur en liaisons -1,2 de la partie butadiénique comprise entre 4% et 65%, une teneur en liaisons trans-1,4 comprise entre 30% et 80%, les copolymères de styrène-butadiène-isoprène (SBIR), et les mélanges de ces différents élastomères (BR, SBR et SBIR). A titre d'exemple, lorsque la ceinture de l'invention est destiné à un pneumatique du type tourisme, si un tel coupage est utilisé, c'est préférentiellement un mélange de SBR et de BR qui est utilisé en coupage avec le caoutchouc naturel jusqu'à concurrence de 25% en poids (soit un maximum de 25 pce).

La ceinture de l'invention est particulièrement destinée à un pneumatique Poids-lourd, qu'il s'agisse d'un pneumatique neuf ou usagé (cas d'un rechapage). Dans un tel cas, l'élastomère isoprénique est préférentiellement utilisé seul, c'est-à-dire sans coupage avec un autre élastomère diénique ou polymère ; plus préférentiellement encore, cet élastomère isoprénique est exclusivement du caoutchouc naturel.

II-2. Charge inorganique renforçante

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

La charge blanche ou inorganique utilisée à titre de charge renforçante peut constituer la totalité ou une partie seulement de la charge renforçante totale, dans ce dernier cas associée par exemple à du noir de carbone. De préférence, la charge inorganique renforçante constitue la majorité, c'est-à-dire plus de 50% de la charge renforçante totale, plus préférentiellement plus de 80% de cette charge renforçante totale.

On peut utiliser tout type de charge inorganique renforçante connue pour ses capacités à renforcer une composition de caoutchouc utilisable pour la fabrication de pneumatiques, en particulier destinée à la ceinture ou à leur bande de roulement.

Comme charges inorganiques renforçantes conviennent notamment des charges minérales du type siliceuse, en particulier de la silice ($SiO_2$), ou du type alumineuse, en particulier de l'alumine ($Al_2O_3$) ou des (oxyde-)hydroxydes d'aluminium.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Des silices précipitées du type hautement dispersibles (dites "HDS") sont notamment utilisables, en particulier lorsque l'invention est mise en oeuvre pour la fabrication de pneumatiques présentant une

faible résistance au roulement. Comme exemples de silices utilisables, on peut citer les silices Ultrasil VN2, Ultrasil VN3, Ultrasil 7000 GR, Ultrasil 7005 de la société Degussa, les silices Zeosil 1165MP, 1135MP, 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0 735 088 (ou US 5 852 099).

L'alumine renforçante utilisée préférentiellement est une alumine ayant une surface BET de 30 à 400 $m^2/g$, plus préférentiellement comprise entre 60 et 250 $m^2/g$, une taille moyenne de particules au plus égale à 500 nm, plus préférentiellement au plus égale à 200 nm, telle que décrite dans la demande EP-A-810 258 (ou US 5 900 449). Comme exemples non limitatifs de telles alumines renforçantes, on peut citer notamment les alumines "Baikalox" "A125" ou "CR125" (société Baïkowski), "APA-100RDX" (société Condea), "Aluminoxid C" (société Degussa) ou "AKP-G015" (Sumitomo Chemicals).

Lorsque la ceinture conforme à l'invention est destinée à un pneumatique pour véhicule industriel du type Poids-lourd, un mode de réalisation préférentiel de l'invention consiste à utiliser une charge inorganique renforçante, en particulier une silice, ayant une surface spécifique BET élevée, supérieure à 130 $m^2/g$, plus préférentiellement comprise dans un domaine de 150 à 250 $m^2/g$, en raison du haut pouvoir renforçant reconnu de telles charges.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices et/ou d'alumines hautement dispersibles telles que décrites ci-dessus.

La charge inorganique renforçante peut être également utilisée en coupage avec du noir de carbone, de préférence en proportion minoritaire (i.e., pour moins de 50%). Comme noirs conviennent tous les noirs de carbone, notamment ceux du type HAF, ISAF, SAF, conventionnellement utilisés dans les pneus (noirs dits de "grade pneumatique"), et en particulier dans les ceintures de ces pneumatiques, comme par exemple les noirs de carbone de séries 300 (N326, N330, N339, N347, N375, etc.).

Dans les ceintures de l'invention, on préfère utiliser, en association avec la charge inorganique renforçante, un noir de carbone à un taux compris entre 2 et 20 pce, plus préférentiellement compris dans un domaine de 5 à 15 pce. Dans les intervalles indiqués, on a constaté qu'on pouvait bénéficier des propriétés colorantes (agent de pigmentation noire) et anti-UV des noirs de carbone, sans pénaliser par ailleurs les performances typiques apportées par la charge inorganique renforçante, notamment la faible hystérèse.

De manière préférentielle, le taux de charge inorganique renforçante est compris entre 30 et 150 pce, plus préférentiellement entre 40 et 120 pce, l'optimum étant différent selon les applications visées. En effet, le niveau de renforcement attendu sur un pneumatique pour véhicule de tourisme est de manière connue inférieur à celui exigé sur un pneumatique Poids-lourd apte à supporter de lourdes charges tout en roulant à grande vitesse de manière soutenue. Dans ce dernier cas, le taux de charge inorganique renforçante est de préférence supérieur à 50 pce, plus préférentiellement supérieur à 55 pce, compris par exemple, à titre avantageux, entre 60 et 100 pce.

Dans le présent exposé, la surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage: 1heure à 160°C - domaine de pression relative *p/po* : 0.05 à 0.17]. La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge organique renforçante, notamment un noir de carbone, recouvert au moins en partie d'une couche inorganique, par exemple de silice, nécessitant quant à elle l'utilisation d'un agent de couplage pour établir la liaison avec l'élastomère diénique.

II-3. Agent de couplage

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-A-X", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;

- A représente un groupe divalent permettant de relier Y et X.

Les agents de couplage ne doivent en particulier pas être confondus avec de simples agents de recouvrement de la charge inorganique qui, de manière connue, peuvent comporter la fonction "Y" active vis-à-vis de la charge inorganique mais sont dépourvus de la fonction "X" active vis-à-vis de l'élastomère diénique.
Des agents de couplage, notamment (silice/élastomère diénique), ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telle que par exemple des fonctions polysulfure (voir par exemple US-A-3 842 111, US-A-3 873 489, US-A-3 997 581 ; les demandes précitées EP-A-722 977, EP-A-735 088, EP-A-810 258, ou les demandes internationales WO 96/37547, WO 97/42256, WO 98/42778, WO 99/28391, WO 00/05300, WO 00/05301, WO 01/55252, WO 01/55253, WO 02/10269).
Parmi tous les composés alkoxysilane-polysulfure connus doivent être cités en particulier les polysulfures de bis-(trialkoxylsilylpropyle), tout particulièrement le disulfure de bis 3-triéthoxysilylpropyle (en abrégé "TESPD") et le tétrasulfure de bis 3-triéthoxysilylpropyle (en abrégé "TESPT"). On rappelle que le TESPD, de formule $[(C_2H_5O)_3Si(CH_2)_6S]_2$, est notamment commercialisé par la société Degussa sous les dénominations Si266 ou Si75 (dans le second cas, sous forme d'un mélange de disulfure (à 75% en poids) et de polysulfures). Le TESPT, de formule $[(C_2H_5O)_3Si(CH_2)_3S_2]_2$, est commercialisé notamment par la société Degussa sous la dénomination Si69 (ou X50S lorsqu'il est supporté à 50% en poids sur du noir de carbone), sous la forme d'un mélange commercial de polysulfures $S_x$ avec une valeur moyenne pour x qui est proche de 4.
Le TESPT, en particulier, est considéré aujourd'hui comme le produit apportant le meilleur compromis en terme de sécurité au grillage, d'hystérèse et de pouvoir renforçant, pour des compositions de caoutchouc renforcées d'une charge inorganique renforçante telle que silice. Il est à ce titre l'agent de couplage de référence de l'homme du métier pour les pneumatiques chargés de silice à basse résistance au roulement, parfois qualifiés de "Pneus Verts" pour l'économie d'énergie offerte (ou "*energy-saving Green Tyres*"), y compris pour les ceintures de ces pneumatiques (voir EP-A-722 977 précitée).
Le silane-polysulfure spécifique utilisé dans les ceintures des pneumatiques conformes à l'invention est choisi parmi les polysulfures de bis-monoalkoxydimethylsilylpropyle et les mélanges de ces polysulfures.
On voit bien que pour assurer la liaison entre l'élastomère diénique et la charge inorganique renforçante, il comporte par molécule:

- d'une part, à titre de fonction "X", un groupe fonctionnel polysulfure ($S_x$) capable de former une liaison stable avec l'élastomère diénique ;
- d'autre part, à titre de fonction "Y", un et un seul groupe ($-OR^3$) par atome de silicium-fonction ($\equiv Si-OR^3$) - lui permettant de se greffer sur la charge inorganique renforçante par l'intermédiaire de ses groupes hydroxyle de surface ;
- le groupe propyle assurant le lien entre le groupe polysulfure au centre de la molécule et les deux fonctions ($\equiv Si-OR^3$) fixées à chaque extrémité de la molécule.

A titre d'exemples préférentiels de polysulfures de bis-monoalkoxydiméthylsilylpropyle et les mélanges de ces polysulfures, on citera notamment ceux de formules particulières (II), (III) ou (IV) ci-après:

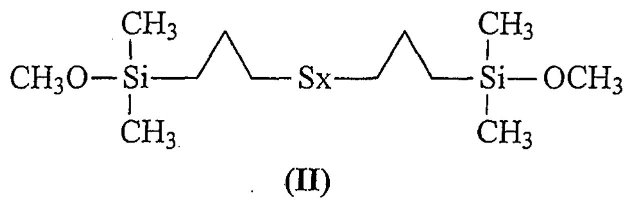

(II)

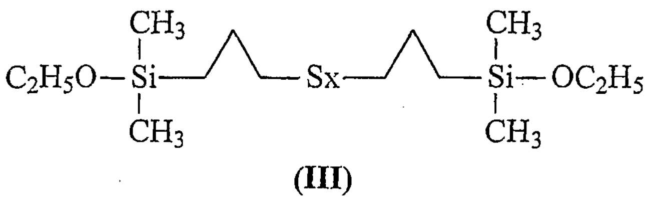

(III)

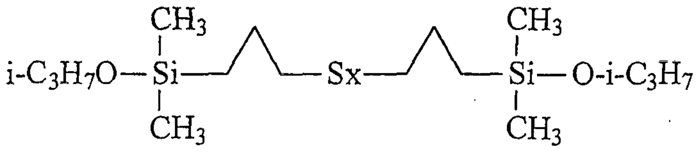

(IV)

Dans les formules (II) à (IV) ci-dessus, dans le cas où la voie de synthèse du silane-polysulfure considéré ne peut donner naissance qu'à une seule sorte de polysulfure, le nombre x est alors un nombre entier, compris de préférence dans un domaine de 2 à 8.

Les polysulfures sont de préférence choisis parmi les disulfures (x=2), trisulfures (x=3), tétrasulfures (x=4), pentasulfures (x=5), hexasulfures (x=6) et les mélanges de ces polysulfures, plus particulièrement parmi les disulfures, trisulfures, tétrasulfures.

Sont notamment sélectionnés, à titre plus préférentiel, les disulfures, trisulfures, tétrasulfures de bis-monoéthoxydiméthylsilylpropyle (formule (III) précitée).

L'homme du métier comprendra aisément que, lorsque la voie de synthèse donne naissance à un mélange de groupes polysulfures ayant chacun un nombre d'atomes de soufre différent (typiquement $S_2$ à $S_8$), alors ce nombre x est généralement un nombre fractionnaire dont la valeur moyenne peut varier selon le mode de synthèse adopté et les conditions particulières de cette synthèse. Dans un tel cas, le polysulfure synthétisé est en fait constitué d'une distribution de polysulfures centrée sur une valeur moyenne (en mole) des "x" allant préférentiellement de 2 à 8, plus préférentiellement de 2 à 6, encore plus préférentiellement comprise dans un domaine de 2 à 4.

On utilise plus préférentiellement encore un silane-tétrasulfure. Par tétrasulfure, on entend dans la présente demande le tétrasulfure $S_4$ proprement dit ainsi que tout mélange de polysulfures $S_x$ dont le nombre moyen d'atomes de S (noté "x"), par molécule de silane, est compris entre 3 et 5, en particulier dans un domaine de 3,5 à 4,5.

Selon un mode de réalisation particulièrement préférentiel de l'invention, on utilise le tétrasulfure de monoéthoxy-diméthylsilylpropyle (en abrégé "MESPT") de formule générale (III) ci-dessus, homologue monoéthoxylé du TESPT précité, de formule développée (VI) (Et=éthyle):

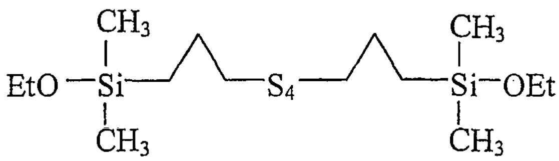

(VI)

Selon un autre mode de réalisation particulier de l'invention, est utilisable le disulfure de monoéthoxydiméthylsilyl-propyle (en abrégé "MESPD") de formule générale (III), homologue monoéthoxylé du TESPD précité, ayant pour formule développée (VII) (x voisin de 2) :

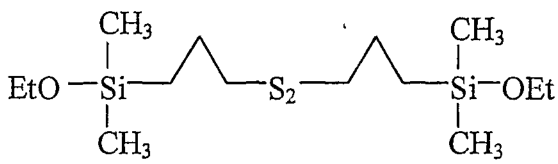

(VII)

Des composés silane-polysulfure répondant aux formules (II) à (VII) ci-dessus ont été décrits dans l'art antérieur, par exemple dans les demandes EP-A-680 997 (ou US-A-5650457), WO 02/30939, WO 02/31041, EP-A-1 043 357 (ou CA-A-2 303 559), FR-A-2 823 215 (ou WO 02/83782) où ils sont exemplifiés dans des compositions de caoutchouc type SBR utilisables pour la fabrication de bandes de roulement de pneumatiques tourisme.

L'homme du métier saura ajuster la teneur en polysulfure en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15%, notamment inférieurs à 10%, sont plus particulièrement préférés.

De manière à tenir compte des différences de surface spécifique et de densité des charges inorganiques

renforçantes susceptibles d'être utilisées, ainsi que des masses molaires des agents de couplage polysulfures spécifiquement utilisés, il est préférable de déterminer le taux optimal d'agent de couplage en moles/$m^2$ de charge inorganique ; ce taux optimal est calculé à partir du rapport pondéral [agent de couplage/charge inorganique], de la surface BET de la charge et de la masse molaire de l'agent de couplage (notée *M* ci-après), selon la relation connue:

$$(\text{moles/m}^2\ \text{charge inorganique}) = [\text{agent de couplage/charge inorganique}]\ (1/\text{BET})\ (1/M)$$

Ainsi, préférentiellement, la quantité d'agent de couplage polysulfure utilisée dans les compositions est comprise entre $10^{-7}$ et $10^{-5}$ moles par $m^2$ de charge inorganique renforçante. Plus préférentiellement encore, cette quantité est comprise entre $5.10^{-7}$ et $5.10^{-6}$ moles par $m^2$ de charge inorganique.

Compte tenu des quantités exprimées ci-dessus, de manière générale, la teneur en silane-polysulfure est de préférence comprise entre 2 et 20 pce. En dessous du minima indiqué l'effet risque d'être insuffisant, alors qu'au delà du maximum préconisé on n'observe généralement plus d'amélioration, alors que les coûts de la composition augmentent ; pour ces différentes raisons, cette teneur est plus préférentiellement encore comprise entre 2 et 10 pce.

L'homme du métier comprendra d'autre part que le silane-polysulfure de formule (I) pourrait être préalablement greffé sur la charge inorganique (par exemple via sa fonction alkoxysilyle, notamment éthoxysilyle), la charge ainsi "précouplée" pouvant ensuite être liée à l'élastomère diénique par l'intermédiaire de la fonction libre polysulfure.

II-4. Additifs divers

Les matrices de caoutchouc des ceintures conformes à l'invention comportent également tout ou partie des additifs usuels utilisés dans les compositions de caoutchouc destinées à la fabrication de ceintures de pneumatiques, comme par exemple des huiles d'extension, des plastifiants, des agents de protection tels que cires anti-ozone, anti-ozonants chimiques, antioxydants, des agents anti-fatigue, des activateurs de couplage tels que décrits par exemple dans les demandes WO00/05300, WO00/05301, WO01/55252, WO01/55253, des accepteurs et donneurs de méthylène, bismaléimides ou autres résines renforçantes tels que décrits par exemple dans WO02/10269, un système de réticulation à base soit de soufre, soit de donneurs de soufre et/ou de peroxyde, des accélérateurs de vulcanisation, des activateurs ou retardateurs de vulcanisation, des systèmes promoteurs d'adhésion du caoutchouc au métal tels que par exemple des sels ou complexes métalliques (par exemple de cobalt, bore, phosphore).

Les matrices isopréniques peuvent également contenir, en complément des silane-polysulfures précédemment décrits, des agents de recouvrement de la charge inorganique renforçante, comportant par exemple la seule fonction Y, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur processabilité, ces agents étant par exemple des alkylalkoxy-silanes, notamment des alkyltriéthoxy-silanes, comme par exemple le 1-octyl-triéthoxysilane commercialisé par la société Degussa-Hüls sous la dénomination Dynasylan Octeo ou le 1-hexa-décyl-triéthoxysilane commercialisé par Degussa-Hüls sous la dénomination Si216, des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-5. Ceintures et pneumatiques conformes à l'invention

Les compositions isopréniques précédemment décrites sont destinées à former tout ou partie de la matrice caoutchouteuse de la ceinture d'un pneumatique, en particulier d'un pneumatique Poids-lourd. Elles sont par exemple utilisables comme gomme de calandrage d'une nappe de ceinture de tissu câblé, qu'il s'agisse d'une nappe "croisée", d'une nappe de protection ou d'une nappe de frettage (à zéro degré), ou destinées à former un simple coussin, bande ou bandelette de gomme, dépourvu(e) de renforts, disposé(e) radialement au-dessus ou au-dessous des différentes nappes de ceinture précitées, voire intercalé(e) entre ces dernières, par exemple pour constituer une sous-couche de la bande de roulement, ou encore placé(e) aux extrémités latérales de ces nappes de ceinture, dans les zones "épaule" du pneumatique, par exemple pour constituer des gommes de découplage.

A titre d'exemple, la figure annexée représente de manière schématique une coupe radiale d'un pneumatique Poids-lourd 1 à armature de carcasse radiale pouvant être conforme ou non à l'invention, dans cette représentation générale. Ce pneumatique 1 comporte un sommet 2, deux flancs 3, deux bourrelets 4, une armature de carcasse radiale 7 s'étendant d'un bourrelet à l'autre. Le sommet 2, surmonté d'une bande de roulement (non représentée sur cette figure très schématique, pour simplification) est de manière connue renforcé par une ceinture 6 constituée d'au moins deux nappes sommet "croisées", recouvertes d'au moins une nappe sommet de protection, toutes ces nappes étant renforcées

par des câblés métalliques en acier au carbone. L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles métalliques dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de la ceinture 6).

Le pneumatique conforme à l'invention de l'exemple ci-dessus a pour caractéristique essentielle de comporter dans son sommet 2 une ceinture 6 conforme à l'invention, la composition isoprénique à base de charge inorganique et du silane-polysulfure constituant la gomme de calandrage des nappes de ceinture 6 (deux nappes croisées et une nappe de protection, dans cet exemple).

Dans le cas d'un pneumatique comportant par exemple une ou plusieurs nappes "à zéro degré", il est préférable que la gomme de calandrage du tissu câblé, qu'il se présente sous forme d'une nappe d'une certaine largeur, voisine de la largeur des nappes croisées, de bandelettes plus étroites voire d'un fil unitaire gainé de caoutchouc, soit également à base d'une charge inorganique renforçante et du silane-polysulfure.

Selon un mode préférentiel de réalisation de l'invention, la composition de caoutchouc à base de l'élastomère isoprénique, de la charge inorganique renforçante et du silane-polysulfure de formule (I) présente, à l'état vulcanisé (i.e., après cuisson), un module sécant en extension (E10) qui est supérieur à 5 MPa, plus préférentiellement compris entre 9 et 20 MPa. C'est dans les domaines de modules indiqués ci-dessus que l'on a enregistré le meilleur compromis d'endurance.

II-6. Préparation des compositions de caoutchouc

Les compositions de caoutchouc sont fabriquées dans des mélangeurs appropriés, en utilisant deux phases de préparation successives bien connues de l'homme du métier : une première phase de travail ou malaxage thermomécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de réticulation ou vulcanisation.

Le procédé de fabrication des compositions selon l'invention est caractérisé en ce qu'au moins la charge inorganique renforçante et le silane-polysulfure sont incorporés par malaxage à l'élastomère isoprénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère isoprénique, charge inorganique renforçante et silane-polysulfure), puis dans un deuxième temps, par exemple après une à deux minutes de malaxage, les éventuels agents de recouvrement ou de mise en oeuvre complémentaires et autres additifs divers, à l'exception du système de vulcanisation ; lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former un profilé de caoutchouc utilisable directement, après découpage ou assemblage aux dimensions souhaitées, et ajout des renforts métalliques ou textiles souhaités, comme nappe de ceinture.

En résumé, le procédé conforme à l'invention, pour préparer une ceinture de pneumatique conforme à l'invention, comportant une composition d'élastomère isoprénique à base d'une charge inorganique renforçante et d'un agent de couplage silane-polysulfure, comporte les étapes suivantes:

- incorporer à un élastomère isoprénique, dans un mélangeur :
  - une charge inorganique renforçante;
  - un silane-polysulfure à titre d'agent de couplage,
- en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite un système de vulcanisation ;
- malaxer le tout jusqu'à une température maximale inférieure à 110°C ;
- calandrer ou extruder la composition ainsi obtenue sous la forme d'une couche de caoutchouc ;
- incorporer cette couche, après ajout éventuel de renforts textiles ou métalliques, dans la ceinture de pneumatique visée,

et il est caractérisé en ce que ledit silane-polysulfure est choisi parmi les polysulfures de bis-monoalkoxydimethylsilylpropyle et les mélanges de ces polysulfures.

La vulcanisation ou cuisson est conduite de manière connue à une température de préférence comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation et de la taille du pneumatique considéré.

Le système de réticulation proprement dit est préférentiellement à base de soufre et d'un accélérateur primaire de vulcanisation, en particulier d'un accélérateur type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), retardateurs de vulcanisation, etc.

Le soufre est utilisé à un taux préférentiel compris entre 1 et 10 pce, plus préférentiellement compris entre 2 et 8 pce, notamment lorsque l'invention est appliquée à un pneumatique du type Poids-lourd. L'accélérateur primaire de vulcanisation est utilisé à un taux préférentiel compris entre 0,5 et 5 pce, plus préférentiellement compris entre 0,5 et 2 pce.

Il va de soi que l'invention concerne les ceintures et pneumatiques précédemment décrits tant à l'état dit "cru" (i.e., avant cuisson) qu'à l'état dit "cuit" ou vulcanisé (i.e., après réticulation ou vulcanisation).

## III. EXEMPLES DE REALISATION

### III-1. Préparation des compositions de caoutchouc

On procède pour les essais qui suivent de la manière suivante: on introduit dans un mélangeur interne, rempli à 70% et dont la température initiale de cuve est d'environ 60°C, l'élastomère isoprénique (ou le mélange d'élastomères diéniques, le cas échéant), la charge renforçante, l'agent de couplage, puis, après une à deux minutes de malaxage, les divers autres ingrédients à l'exception du système de vulcanisation. On conduit alors un travail thermomécanique (phase non-productive) en une ou deux étapes (durée totale du malaxage égale par exemple à environ 7 min), jusqu'à atteindre une température maximale de "tombée" d'environ 165-170°C. On récupère le mélange ainsi obtenu, on le refroidit puis on ajoute le système de vulcanisation (soufre et accélérateur primaire sulfénamide) sur un mélangeur externe (homo-finisseur) à 30°C, en mélangeant le tout (phase productive) par exemple pendant 3 à 10 min.

Les compositions ainsi obtenues sont ensuite soit extrudées sous la forme de plaques (épaisseur de 2 à 3 mm) pour la mesure de leurs propriétés physiques ou mécaniques, soit calandrées pour réalisation d'un tissu câblé métallique formant une nappe ceinture "de travail" d'un pneumatique Poids-lourd.

### III-2. Essais de caractérisation

Cet essai a pour but de démontrer les performances améliorées d'une composition isoprénique à base d'une charge inorganique renforçante (silice) et d'un silane-polysulfure de formule (I), comparée d'une part à une première composition témoin utilisant du noir de carbone (sans agent de couplage) comme charge renforçante, d'autre part à une seconde composition témoin utilisant de la silice comme charge renforçante et un silane-polysulfure conventionnel comme agent de couplage.

On prépare pour cela trois compositions à base de caoutchouc naturel :

- composition notée G-1 : noir de carbone (témoin 1) ;

- composition notée C-2 : silice + TESPT (témoin 2) ;
- composition notée C-3 : silice + MESPT (invention).

Ces 3 compositions sont destinées à constituer la "gomme de calandrage" de nappes de travail d'une ceinture de pneu Poids-lourd. La composition C-1 est la composition témoin à base de noir de carbone, la composition C-2 est une composition à base de silice selon l'art antérieur (EP-A-722 977 précitée) ; seule la composition C-3 est conforme à l'invention.

Dans les compositions C-2 et C-3, les deux alkoxysilanes tétrasulfurés sont utilisés à un taux sensiblement isomolaire en silicium (base x = 4), c'est-à-dire qu'on utilise, quelle que soit la composition testée, le même nombre de moles de fonctions "Y" (Si≡(OEt)a ; avec "a" égal à 1 ou 3) réactives vis-à-vis de la silice et de ses groupes hydroxyles de surface. Leur taux représente moins de 10% en poids par rapport à la quantité de charge inorganique renforçante, moins de 7% en ce qui concerne la composition selon l'invention.

On rappelle que le TESPT, agent de couplage de référence pour les compositions à base de silice, a pour formule développée (Et = éthyle) :

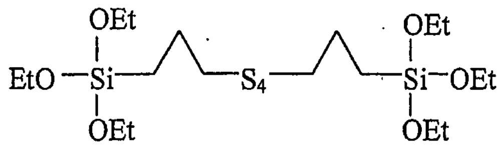

On utilise dans cet essai le TESPT commercialisé par la société Degussa sous la dénomination "Si69" (x moyen égal à 3,75 selon fiche technique du fournisseur).

La structure ci-dessus est donc très proche de celle du MESPT de formule (VI) :

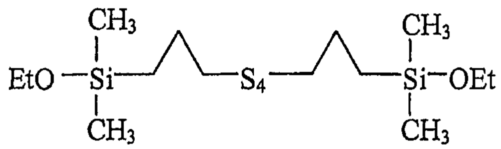

ce dernier ne s'en différenciant que par la présence d'un seul groupe éthoxyle (et deux groupes méthyle) en lieu et place des trois groupes éthoxyle usuels.

Le MESPT ci-dessus a été préparé comme suit (voir FR-A-2 823 215 précitée).

Dans un réacteur en verre de 3 litres double enveloppe qui est équipé d'un réfrigérant, d'une agitation mécanique (turbine de Rushton), d'un thermocouple, d'un tuyau d'admission de gaz (argon ou $H_2S$) et d'une arrivée pour la pompe péristaltique, 91,9 g d'éthanolate de sodium (1,352 mole, soit l'équivalent de 2 moles pour 1 mole de $H_2S$) en solution à 21% massique dans l'éthanol (438 g) et 250 ml de toluène sont introduits en pied sous courant d'argon. L'ensemble est placé sous agitation (200-300 tours/min). Une masse de 65 g en soufre (2,031 moles, soit l'équivalent de 3 moles pour une mole de $H_2S$) est alors additionnée. Après une purge des circuits à l'argon, l'$H_2S$ (23 g, soit 0,676 mole) est introduit par bullage au moyen d'un tube plongeant, soit pendant 45 à 60 minutes. La solution passe d'une coloration orange avec des particules de couleur jaune-orange à une coloration brun foncé sans particule.

Sous courant d'argon, le mélange est chauffé à 60°C durant 1 heure de manière à compléter la conversion en $Na_2S_4$ anhydre. Le milieu réactionnel passe d'une couleur brun foncé à une couleur rouge-brun avec des particules brunes. Le milieu réactionnel est alors refroidi à l'aide d'un moyen de réfrigération (à 10-15°C) pour atteindre une température voisine de 20°C. Une masse de 244 g de γ-chloropropyléthoxydiméthylsilane (1,352 moles, soit l'équivalent de 2 moles pour une mole de $H_2S$) est ajoutée au moyen d'une pompe péristaltique (10 ml/min) sur 30 minutes. Le milieu réactionnel est ensuite chauffé à 75±2°C durant 4h. En cours d'essai, le NaCl précipite. Au bout des 4 heures de chauffage, le milieu est refroidi à température ambiante (20-25°C). Il prend une couleur orange avec des particules jaunes. Après dépotage du milieu réactionnel, il est filtré sur carton de cellulose sous pression d'azote dans un filtre en acier inoxydable. Le gâteau est lavé par 2 fois 100 ml de toluène. Le filtrat de couleur rouge brun est évaporé sous vide (pression maximum = $3\text{-}4.10^2$ Pa - température maximale = 70°C).

Une masse de 280 g de tétrasulfure de bis-monoéthoxydiméthylsilylpropyle (0,669 mole) est alors obtenue sous forme d'une huile de couleur jaune-orange. Un contrôle par RMN-$^1$H, RMN-$^{29}$Si et RMN-$^{13}$C permet de vérifier que la structure obtenue est bien conforme à la formule (VI). Le nombre moyen x d'atomes de soufre par molécule de MESPT, déterminé de manière connue (analyse élémentaire par fluorescence X et GPC) est égal à 3,9 (donc pratiquement égal à 4).

Les tableaux 1 et 2 donnent la formulation des trois compositions (tableau 1 - taux des différents produits

exprimés en pce), leurs propriétés avant et après cuisson (60 min à 140°C). Le système de vulcanisation est constitué par soufre et sulfénamide.

Une première comparaison entre les témoins C-2 et C-1 montre bien que l'utilisation de la charge inorganique (avec son agent de couplage conventionnel associé), à un taux élevé comparativement à C-1, permet d'obtenir un gain très significatif (près de 50%) en rigidité (MA10), ce qui était visé.

En contrepartie, le "prix à payer" pour cette rigidification par taux élevé de silice est double :

- une remontée sensible (proche de 45%) de l'hystérèse par rapport à la composition C-1, synonyme d'une augmentation de la température de la ceinture en fonctionnement, donc a priori nuisible à son endurance ; il est à noter que cette remontée reste néanmoins très inférieure à celle qui aurait été observée à taux équivalent de noir de carbone ;

- une processabilité fortement pénalisée (augmentation de 30% de la plasticité Mooney), ce qui est préjudiciable aux opérations de calandrage, à la bonne qualité de fabrication des tissus métalliques ainsi qu'à la productivité industrielle.

Les autres propriétés sont peu modifiées entre les compositions C-1 et C-2. En résumé, le remplacement du noir de carbone par de la silice ne permet pas d'obtenir un compromis de propriétés satisfaisant en termes de rigidité-hystérèse-processabilité.

Une comparaison, dans un deuxième temps, entre les compositions C-3 et C-2 montre par contre que le remplacement de l'agent de couplage conventionnel (TESPT) par le silane-polysulfure de formule (I) (MESPT), conformément à l'invention, conduit de manière inattendue pour l'homme du métier :

- à un maintien des valeurs de rigidité (MA10) à un niveau satisfaisant, nettement supérieur à la solution témoin avec noir de carbone (composition C-1), tout en offrant
- une hystérèse (voir $\tan(\delta)_{max}$) sensiblement diminuée par rapport à la composition C-2, favorable à la résistance au roulement et à l'endurance globale du pneumatique et de sa ceinture ;
- enfin une diminution importante de la plasticité Mooney par rapport à la composition C-2, synonyme d'une processabilité améliorée, en particulier lors des opérations de calandrage.

Si les résultats enregistrés ci-dessus constituent déjà un résultat inattendu et avantageux pour l'homme du métier, en termes du compromis rigidité-hystérèse-processabilité précédemment évoqué, on note par ailleurs des propriétés rhéométriques sensiblement améliorées par rapport aux deux témoins :

- une constante de vitesse K supérieure ;
- un délai d'induction $t_i$ plus long (6 min au lieu de 4 min) ; et
- un couple à 95% du maximum atteint dans un temps (voir $t_{95}$) plus court, la durée totale de vulcanisation ($t_{95}$-$t_i$) étant ainsi réduite de plus de 30% par rapport aux témoins.

Des temps de cuisson réduits sont notamment avantageux pour les ceintures destinées au rechapage complet des pneumatiques, qu'il s'agisse de rechapage "à froid' (utilisation d'une ceinture précuite) ou de rechapage "à chaud" conventionnel (utilisation d'une ceinture à l'état cru). Dans ce dernier cas, une durée de cuisson réduite, outre le fait qu'elle diminue les coûts de production, limite la surcuisson (ou post-cuisson) imposée au reste de l'enveloppe ("carcasse") du pneumatique usagé, déjà vulcanisé ; à temps de cuisson identique, les ceintures peuvent aussi être cuites à une température plus basse, ce qui constitue un autre moyen de préserver la "carcasse" du problème de surcuisson évoqué ci-dessus.

Enfin et surtout, une augmentation très sensible de la résistance à la fatigue et à la fissuration est obtenue sur la composition C-3 selon l'invention, comparée aux témoins C-1 et C-2, à travers la mesure de "MFTRA" (base 100 retenue pour la composition témoin C-1 à base de noir de carbone).

Ceci laisse entrevoir à l'homme du métier une endurance élevée des ceintures et pneumatiques conformes à l'invention, vis-à-vis en particulier du problème de séparation des extrémités des nappes de sommet ("clivage") évoqué précédemment.

En résumé, les résultats de ces essais comparatifs démontrent clairement un comportement global amélioré des ceintures de pneumatiques à base d'une charge inorganique renforçante et d'un agent de couplage silane-polysulfure de formule (I), comparativement à l'emploi d'un silane-polysulfure conventionnel tel que le TESPT.

**Tableau 1**

| Composition N°: | C-1 | C-2 | C-3 |
|---|---|---|---|
| NR (1) | 100 | 100 | 100 |

(suite)

| Composition N°: | C-1 | C-2 | C-3 |
|---|---|---|---|
| noir de carbone (N330) | 52 | 10 | 10 |
| silice (2) | - | 66 | 66 |
| silane (3) | - | 6 | |
| silane (4) | - | - | 4.6 |
| DPG (5) | - | 1 | 1 |
| ZnO | 9 | 9 | 9 |
| acide stéarique | 0.7 | 2.0 | 2.0 |
| antioxydant (6) | 1.5 | 1.5 | 1.5 |
| soufre | 6 | 4 | 4 |
| accélérateur (7) | 0.9 | 1.2 | 1.2 |

(1) caoutchouc naturel ;
(2) silice "Ultrasil VN3" de la société Degussa (BET : environ 170-180 $m^2/g$ - CTAB : environ 160-170 $m^2/g$) ;
(3) silane-polysulfure TESPT ;
(4) silane-polysulfure MESPT ;
(5) diphénylguanidine ("Vulcacit D" de la société Bayer) ;
(6) N-1,3-diméthylbutyl-N-phényl-para-phénylènediamine ("Santoflex 6-PPD" de la société Flexsys) ;
(7) N-dicyclohexyl-2-benzothiazyl-sulfénamide ("Santocure DCBS" de la société Flexsys).

**Tableau 2**

| Composition N°: | C-1 | C-2 | C-3 |
|---|---|---|---|
| *Propriétés avant cuisson:* | | | |
| Mooney (UM) | 52 | 68 | 61 |
| $t_i$ (min) | 4 | 4 | 6 |
| $t_{95}$ (min) | 49.3 | 49.8 | 37.8 |
| $t_{95}$ - $t_i$ (min) | 45.3 | 45.8 | 31.8 |
| K ($min^{-1}$) | 0.060 | 0.063 | 0.085 |
| *Propriétés après cuisson:* | | | |
| MA10 (MPa) | 9.1 | 13.3 | 12.0 |
| MA100 (MPa) | 4.8 | 4.5 | 4.3 |
| contrainte rupture (MPa) | 16.0 | 15.6 | 15.9 |
| allongement rupture (%) | 360 | 460 | 490 |
| $tan(\delta)_{max}$ | 0.100 | 0.143 | 0.120 |
| fatigue "MFTRA" (u. r.) | 100 | 120 | 183 |

## Revendications

**1.** Ceinture de pneumatique comportant au moins une composition élastomérique à base d'au moins un élastomère isoprénique, une charge inorganique renforçante et un silane-polysulfure, **caractérisée en ce que** ledit silane-polysulfure est choisi parmi les polysulfures de bis-monoalkoxydiméthylsilylpropyle et les mélanges de ces polysulfures.

**2.** Ceinture de pneumatique selon la revendication 1, le silane-polysulfure étant choisi parmi les polysulfures de bis-monoalkoxydiméthylsilylpropyle de formules (II), (III) ou (IV) et les mélanges de ces polysulfures :

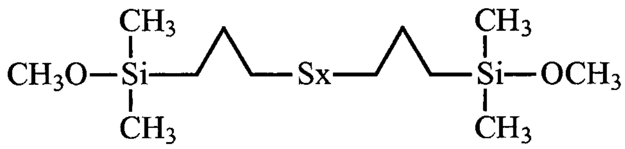

(II)

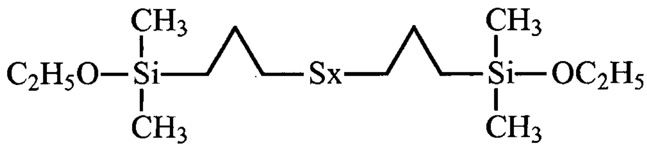

(III)

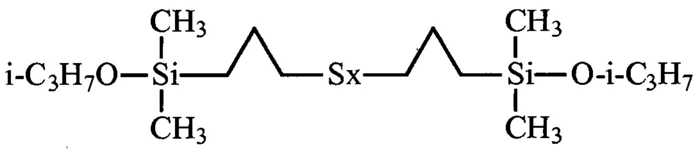

(IV)

x étant un nombre entier ou fractionnaire égal ou supérieur à 2.

3. Ceinture de pneumatique selon l'une quelconque des revendications 1 ou 2, le polysulfure étant choisi parmi les disulfures (x=2), trisulfures (x=3), tétrasulfures (x=4), pentasulfures (x=5), hexasulfures (x=6) et les mélanges de ces polysulfures.

4. Ceinture de pneumatique selon la revendication 3, le polysulfure étant choisi parmi les disulfures, trisulfures, tétrasulfures de bis-monoéthoxydiméthylsilylpropyle, et les mélanges de ces polysulfures.

5. Ceinture de pneumatique selon l'une quelconque des revendications 1 à 4, x étant compris dans un domaine de 2 à 5.

6. Ceinture de pneumatique selon l'une quelconque des revendications 1 à 5, l'élastomère isoprénique étant choisi dans le groupe constitué par le caoutchouc naturel, les polyisoprènes cis-1,4 de synthèse et les mélanges de ces élastomères.

7. Ceinture de pneumatique selon l'une quelconque des revendications 1 à 6, le taux de charge inorganique renforçante étant compris entre 30 et 150 pce (parties en poids pour cent parties d'élastomère).

8. Ceinture de pneumatique selon l'une quelconque des revendications 1 à 7, la quantité de silane-polysulfure étant comprise entre 2 et 20 pce.

9. Ceinture de pneumatique selon l'une quelconque des revendications 1 à 8, la quantité de silane-polysulfure représentant entre 2% et 20% en poids par rapport à la quantité de charge inorganique renforçante.

10. Ceinture de pneumatique selon l'une quelconque des revendications 1 à 9, la charge inorganique renforçante étant constituée majoritairement ou exclusivement de silice.

11. Ceinture de pneumatique selon la revendication 10, la silice présentant une surface spécifique BET supérieure à 130 $m^2/g$, de préférence comprise dans un domaine de 150 à 250 $m^2/g$.

12. Ceinture de pneumatique selon l'une quelconque des revendications 1 à 11, comportant en outre du noir de carbone.

**13.** Ceinture de pneumatique selon la revendication 12, le noir de carbone étant présent à un taux compris entre 2 et 20 pce.

**14.** Ceinture de pneumatique selon l'une quelconque des revendications 6 à 13, l'élastomère isoprénique étant du caoutchouc naturel.

**15.** Utilisation, pour la fabrication ou le rechapage d'un pneumatique, d'une ceinture de pneumatique selon l'une quelconque des revendications 1 à 14.

**16.** Pneumatique comportant une ceinture selon l'une quelconque des revendications 1 à 15.

**17.** Pneumatique selon la revendication 16 consistant en un pneumatique Poids-lourd.

**18.** Procédé pour préparer une ceinture de pneumatique comportant au moins une composition de caoutchouc à base d'un élastomère isoprénique, d'une charge inorganique renforçante et d'un agent de couplage silane-polysulfure, comportant les étapes suivantes:

• incorporer à un élastomère isoprénique, dans un mélangeur :

u ne charge inorganique renforçante ;
u n silane-polysulfure à titre d'agent de couplage,

• en malaxant thermomécaniquement le tout, en une ou plusieurs fois, jusqu'à atteindre une température maximale comprise entre 110°C et 190°C ;
• refroidir l'ensemble à une température inférieure à 100°C ;
• incorporer ensuite un système de vulcanisation ;
• malaxer le tout jusqu'à une température maximale inférieure à 110°C,
• calandrer ou extruder la composition ainsi obtenue sous la forme d'une couche de caoutchouc,
• incorporer cette couche, après ajout éventuel de renforts textiles ou métalliques, dans la ceinture de pneumatique,

ledit procédé étant **caractérisé en ce que** ledit silane-polysulfure est choisi parmi les polysulfures de bis-monoalkoxydiméthylsilylpropyle et les mélanges de ces polysulfures.

**19.** Utilisation, pour la fabrication d'une ceinture de pneumatique comportant au moins une composition isoprénique à base d'une charge inorganique renforçante, d'un silane-polysulfure choisi parmi les polysulfures de bis-monoalkoxydiméthylsilylpropyle et les mélanges de ces polysulfures

**Patentansprüche**

**1.** Reifengürtel, umfassend mindestens eine elastomere Zusammensetzung auf Basis von mindestens einem Isoprenelastomer, einen verstärkenden anorganischen Füllstoff und ein Silanpolysulfid, **dadurch gekennzeichnet, dass** das Silanpolysulfid aus Bismonoalkoxydimethylsilylpropylpolysulfiden und Mischungen dieser Polysulfide ausgewählt ist.

**2.** Reifengürtel nach Anspruch 1, wobei das Silanpolysulfid aus den Bis-monoalkoxydimethylsilyl-propylpolysulfiden der Formel (II), (III) oder (IV) und Mischungen dieser Polysulfide ausgewählt ist:

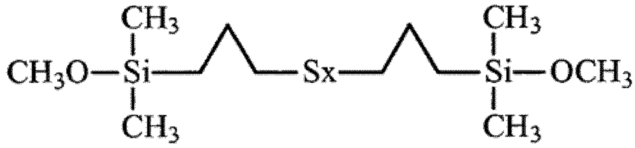

**(II)**

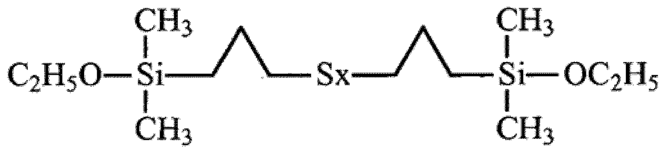

(III)

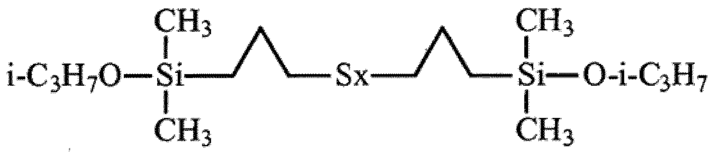

(IV)

wobei x für eine ganze oder gebrochene Zahl größer gleich 2 steht.

3. Reifengürtel nach einem der Ansprüche 1 oder 2, wobei das Polysulfid aus Disulfiden (x=2), Trisulfiden (x=3), Tetrasulfiden (x=4), Pentasulfiden (x=5), Hexasulfiden (x=6) und Mischungen dieser Polysulfide ausgewählt ist.

4. Reifengürtel nach Anspruch 3, wobei das Polysulfid aus Bis-monoethoxydimethylsilylpropyldisulfiden, -trisulfiden, -tetrasulfiden und Mischungen dieser Polysulfide ausgewählt ist.

5. Reifengürtel nach einem der Ansprüche 1 bis 4, wobei x im Bereich von 2 bis 5 liegt.

6. Reifengürtel nach einem der Ansprüche 1 bis 5, wobei das Isoprenelastomer aus der Gruppe bestehend aus Naturkautschuk, synthetischen cis-1,4-Polyisoprenen und Mischungen dieser Elastomere ausgewählt ist.

7. Reifengürtel nach einem der Ansprüche 1 bis 6, wobei der Gehalt an verstärkendem anorganischem Füllstoff zwischen 30 und 150 phe (Gewichtsteile pro hundert Teile Elastomer) liegt.

8. Reifengürtel nach einem der Ansprüche 1 bis 7, wobei die Menge an Silanpolysulfid zwischen 2 und 20 phe liegt.

9. Reifengürtel nach einem der Ansprüche 1 bis 8, wobei die Menge an Silanpolysulfid zwischen 2 und 20 Gew.-%, bezogen auf die Menge an verstärkendem anorganischem Füllstoff, ausmacht.

10. Reifengürtel nach einem der Ansprüche 1 bis 9, wobei der verstärkende anorganische Füllstoff hauptsächlich oder ausschließlich aus Kieselsäure besteht.

11. Reifengürtel nach Anspruch 10, wobei die Kieselsäure eine spezifische BET-Oberfläche von mehr als 130 $m^2/g$ und vorzugsweise in einem Bereich von 150 bis 250 $m^2/g$ aufweist.

12. Reifengürtel nach einem der Ansprüche 1 bis 11, der außerdem Ruß umfasst.

13. Reifengürtel nach Anspruch 12, wobei der Ruß in einem Gehalt zwischen 2 und 20 phe vorliegt.

14. Reifengürtel nach einem der Ansprüche 6 bis 13, wobei es sich bei dem Isoprenelastomer um Naturkautschuk handelt.

15. Verwendung eines Reifengürtels nach einem der Ansprüche 1 bis 14 zur Herstellung oder Runderneuerung eines Reifens.

16. Reifen, umfassend einen Gürtel nach einem der Ansprüche 1 bis 15.

17. Reifen nach Anspruch 16, der aus einem Lastkraftwagenreifen besteht.

18. Verfahren zur Herstellung eines Reifengürtels, umfassend mindestens eine Kautschukzusammensetzung auf Basis

eines Isoprenelastomers, einen verstärkenden anorganischen Füllstoff und ein Silanpolysulfid-Kupplungsmittel, bei dem man:

• in einem Mischer

- einen verstärkenden anorganischen Füllstoff und
- ein Silanpolysulfid als Kupplungsmittel in ein Isoprenelastomer einarbeitet,

• indem man das Ganze ein- oder mehrmals thermomechanisch knetet, bis eine Höchsttemperatur zwischen 110°C und 190°C erreicht ist;
• das Ganze auf eine Temperatur von weniger als 100°C abkühlt;
• dann ein Vulkanisationssystem einarbeitet;
• das Ganze bis zu einer Höchsttemperatur von weniger als 110°C knetet;
• die so erhaltene Zusammensetzung in Form einer Kautschukschicht kalandriert oder extrudiert,
• diese Schicht gegebenenfalls nach Zugabe von textilen oder metallischen Verstärkungen in den Reifengürtel einarbeitet,
wobei das Verfahren **dadurch gekennzeichnet ist, dass** das Silanpolysulfid aus Bis-monoalkoxydimethylsilylpropylpolysulfiden und Mischungen dieser Polysulfide ausgewählt wird.

**19.** Verwendung eines aus Bis-monoalkoxydimethylsilylpropylpolysulfiden und Mischungen dieser Polysulfide ausgewählten Silanpolysulfids zur Herstellung eines Reifengürtels, umfassend mindestens eine Isoprenzusammensetzung auf Basis eines verstärkenden anorganischen Füllstoffs.

## Claims

**1.** A tyre belt comprising at least an elastomeric composition based on an isoprene elastomer, a reinforcing inorganic filler and a silane polysulphide, **characterised in that** said silane polysulphide is selected from among bis-monoalkoxydimethylsilylpropyl polysulphides and mixtures of these polysulphides.

**2.** A tyre belt according to Claim 1, the silane polysulphide being selected from among bis-monoalkoxydimethylsilylpropyl polysulphides of formulae (II), (III) or (IV) and mixtures of these polysulphides:

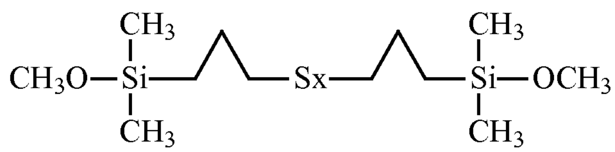

**(II)**

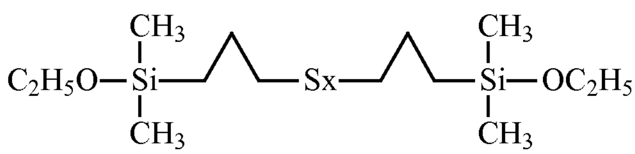

**(III)**

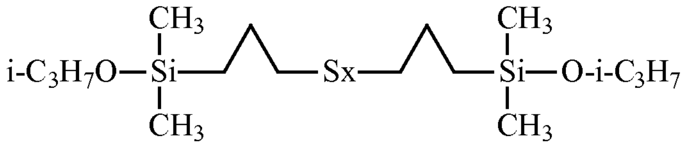

**(IV)**

x being an integer or fractional number equal to or greater than 2.

3. A tyre belt according to any one of Claims 1 or 2, the polysulphide being selected from among the disulphides (x=2), trisulphides (x=3), tetrasulphides (x=4), pentasulphides (x=5), hexasulphides (x=6) and mixtures of these polysulphides.

4. A tyre belt according to Claim 3, the polysulphide being selected from among disulphides, trisulphides and tetrasulphides of bis-monoethoxydimethylsilylpropyl, and mixtures of these polysulphides.

5. A tyre belt according to any one of Claims 1 to 4, x being within a range from 2 to 5.

6. A tyre belt according to any one of Claims 1 to 5, the isoprene elastomer being selected from among the group consisting of natural rubber, synthetic cis-1,4 polyisoprenes and mixtures of these elastomers.

7. A tyre belt according to any one of Claims 1 to 6, the amount of reinforcing inorganic filler being between 30 and 150 phr (parts by weight to one hundred parts of elastomer).

8. A tyre belt according to any one of Claims 1 to 7, the quantity of silane polysulphide being between 2 and 20 phr.

9. A tyre belt according to any one of Claims 1 to 8, the quantity of silane polysulphide representing between 2 and 20% by weight relative to the quantity of reinforcing inorganic filler.

10. A tyre belt according to any one of Claims 1 to 9, the reinforcing inorganic filler being constituted majoritarily or exclusively of silica.

11. A tyre belt according to Claim 10, the silica having a BET specific surface area greater than 130 $m^2/g$, preferably within a range from 150 to 250 $m^2/g$.

12. A tyre belt according to any one of Claims 1 to 11, furthermore comprising carbon black.

13. A tyre belt according to Claim 12, the carbon black being present in an amount of between 2 and 20 phr.

14. A tyre belt according to any one of Claims 6 to 13, the isoprene elastomer being natural rubber.

15. The use, for the manufacture or the retreading of a tyre, of a tyre belt according to any one of Claims 1 to 14.

16. A tyre comprising a belt according to any one of Claims 1 to 15.

17. A tyre according to Claim 16, consisting of a heavy-vehicle tyre.

18. A process for preparing a tyre belt comprising at least one rubber composition based on an isoprene elastomer, a reinforcing inorganic filler and a silane polysulphide coupling agent, comprising the following steps:

- incorporating in an isoprene elastomer, in a mixer:
  - a reinforcing inorganic filler;
  - a silane polysulphide as coupling agent,
- thermomechanically kneading the entire mixture, in one or more stages, until a maximum temperature of

between 110°C and 190°C is reached;
- cooling the entire mixture to a temperature of less than 100°C;
- then incorporating a vulcanisation system;
- kneading the entire mixture until a maximum temperature less than 110°C is reached,
- calendering or extruding the composition thus obtained in the form of a layer of rubber,
- incorporating this layer, after the possible addition of textile or metallic reinforcing threads, in the tyre belt,

said process being **characterised in that** said silane polysulphide is selected from among bismonoalkoxydimethylsilylpropyl polysulphides and mixtures of these polysulphides.

**19.** The use, for the manufacture of a tyre belt comprising at least an isoprene composition based on a reinforcing inorganic filler, of a silane polysulphide selected from among bismonoalkoxydimethylsilylpropyl polysulphides and mixtures of these polysulphides.

# Figure

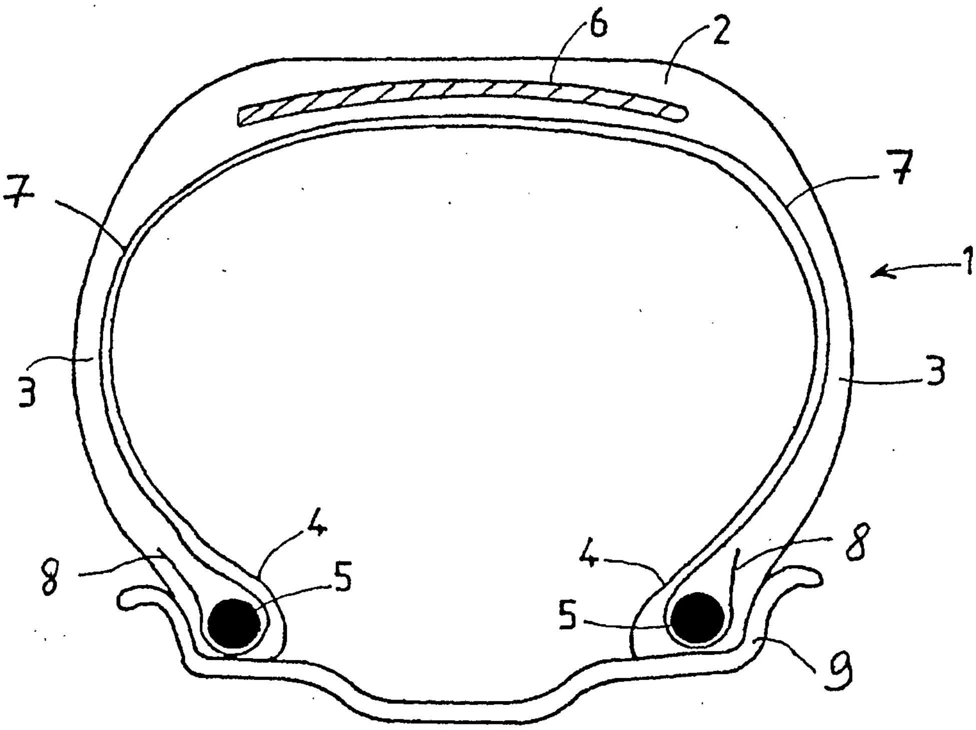

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0722977 A
- US 5871957 A
- WO 0231041 A
- EP 1043357 A
- EP 0735088 A
- US 5852099 A
- EP 810258 A
- US 5900449 A
- US 3842111 A
- US 3873489 A
- US 3997581 A
- EP 722977 A
- EP 735088 A
- WO 9637547 A
- WO 9742256 A
- WO 9842778 A
- WO 9928391 A
- WO 0005300 A
- WO 0005301 A
- WO 0155252 A
- WO 0155253 A
- WO 0210269 A
- EP 680997 A
- US 5650457 A
- WO 0230939 A
- CA 2303559 A
- FR 2823215 A
- WO 0283782 A

### Littérature non-brevet citée dans la description

- **BRUNAUER-EMMETT-TELLER.** *The Journal of the American Chemical Society,* Février 1938, vol. 60, 309